# EUROPÄISCHE PATENTSCHRIFT

(11) **EP 2 882 314 B1**
(45) Veröffentlichungstag und Bekanntmachung des Hinweises auf die Patenterteilung: **04.04.2018**
(21) Anmeldenummer: 13750498.1
(22) Anmeldetag: 20.07.2013
(51) Int. Cl.: A46B 9/06, A46B 1/00

(54) **INTERDENTAL-REINIGER**
INTERDENTAL CLEANER
DISPOSITIF DE NETTOYAGE INTERDENTAIRE

(30) Priorität: 09.08.2012 DE 102012015663
(43) Veröffentlichungstag der Anmeldung: 17.06.2015
(73) Patentinhaber: Interbros GmbH, 79677 Schönau (DE)
(72) Erfinder: BUTZ, Jürgen, 79677 Schönau (DE); PÖTSCH, Gerhard, 79108 Freiburg (DE); RÜMMELE, Markus, 79685 Häg (DE); HAUSER, Hannes, 79650 Schopfheim (DE); LEHR, Steffen, 79674 Todnau (DE)
(74) Vertreter: Lichti - Patentanwälte Partnerschaft mbB
(86) Internationale Anmeldenummer: PCT/EP2013/002154
(87) Internationale Veröffentlichungsnummer: WO 2014/023395

(56) Entgegenhaltungen:
- EP-A1- 0 354 352
- WO-A1-2009/113681
- DE-A1-102005 026 268
- US-A1- 2003 027 101
- US-A1- 2010 024 839

## Beschreibung

Die Erfindung betrifft einen Interdental-Reiniger mit einem stabförmigen Träger, der in einem axialen Endbereich eine Reinigungseinrichtung aufweist, wobei die Reinigungseinrichtung einen aus einem weich-elastischen Kunststoff bestehenden Überzug des Trägers umfasst und wobei auf der Außenseite des Überzugs eine Strukturierung ausgebildet ist, die mehrere mit radialer Komponente vom Überzug hervorstehende Finger aufweist, die aus dem gleichen Material wie der Überzug bestehen und einstückig mit diesem verbunden sind.

Ein entsprechender Interdental-Reiniger ist aus der EP 0 932 371 B1 bekannt. Der dort beschriebene Interdental-Reiniger besitzt einen stabförmigen Träger aus einem 1. Kunststoff, der an seinem einen Ende ein Griffteil und an seinem axial entgegengesetzten Ende eine Reinigungseinrichtung in Form eines Überzugs des Trägers besitzt. Der Überzug besteht aus einem weich-elastischen Kunststoff, beispielsweise einem thermoplastischen Elastomer und ist auf den Träger aufgespritzt. Der Überzug besitzt auf seiner Außenseite eine Strukturierung in Form von Noppen oder sich radial nach außen erstreckenden Fingern. Der Benutzer ergreift den Interdental-Reiniger am Griffteil und führt den stabförmigen Träger mit dem den Überzug tragenden Ende in einen Zahnzwischenraum ein und bewegt den Interdental-Reiniger hin und her, wodurch der Zahnzwischenraum gereinigt und eventuell anhaftende Partikel gelöst werden. US 2010/024839 A1 offenbart einen interdental-Reiniger nach dem Oberbegriff von Anspruch 1. Es hat sich gezeigt, dass mit diesem Interdental-Reiniger eine sehr gute Reinigung der Zahnzwischenräume möglich ist, jedoch ist es schwierig, Verunreinigungen oder Ablagerungen aus sehr engen, feinen Taschen des Gebisses zu entfernen. Der Erfindung liegt die Aufgabe zugrunde, einen Interdental-Reiniger der genannten Art zu schaffen, mit dem sich auch eine Reinigung in engen Taschen und Spalten zuverlässig erreichen lässt.

Diese Aufgabe wird erfindungsgemäß durch einen Interdental-Reiniger mit den Merkmalen des Anspruchs 1 gelöst. Dabei ist vorgesehen, dass die Strukturierung zusätzlich zu den mit radialer Komponente vom Überzug hervorstehenden Fingern auch einen Borstenbesatz mit mehreren mit radialer Komponente vom Überzug hervorstehenden Borstenbündeln und/oder Einzelborsten aufweist, die jeweils von vorgefertigten, in den Überzug und/oder in den Träger eingebetteten Borsten gebildet sind.

Borsten im Sinne dieser Anmeldung sind dünne vorgefertigte Abschnitte eines aus Kunststoff bestehenden Monofilamentes oder Multifilamentes, die einen maximalen Durchmesser von 0,25mm aufweisen.

Der in diesem Text verwendete Begriff "axial" bezieht sich auf die Längsachse des stabförmigen Trägers und somit auch auf die Längsachse des Überzugs. Der Begriff "radial" bezieht sich dementsprechend auf eine senkrecht zur axialen Längsrichtung verlaufende Richtung.

Die Finger und/oder die Borstenbündel und/oder die Einzelborsten können sich entweder radial, d.h. im rechten Winkel zur Längsachse des Interdentalreinigers, oder auch schräg zu dieser erstrecken, was durch den Ausdruck "mit radialer Komponente" zum Ausdruck gebracht ist.

Der Überzug ist vorzugsweise in bekannter Weise auf den stabförmigen Träger aufgespritzt und kann aus einem thermoplastischen Kunststoff beispielsweise einem thermoplastischen Elastomer auf SEBS- oder Ethylen-Propylen-DienKautschuk-Basis oder aus einem sonstigen weichen Kunststoff, beispielsweise Silikon bestehen. Der Überzug ist vorzugsweise hülsenförmig ausgebildet und besitzt eine der Längserstreckung des stabförmigen Trägers folgende Form.

Aufgrund der gemeinsamen Anordnung von Fingern und dem Borstenbesatz auf der Außenseite des Überzugs lässt sich in Kombination eine hohe Reinigungswirkung erzielen. Die hervorstehenden Finger, die sich beim Einführen des Interdental-Reinigers in den Zahnzwischenraum verformen und verbiegen, dienen im wesentlichen der Reinigung der Oberflächen des Zahnzwischenraums. Aufgrund der geringen Abmessungen der Borsten können diese aber auch in enge Spalte und Zwischenräume eindringen und diese reinigen, die ansonsten mit den Fingern nicht gereinigt werden könnten.

Die Finger sind einstückig mit dem Überzug verbunden und bestehen aus dem gleichen Material wie dieser. Sie werden bei der Herstellung des Interdental-Reinigers zusammen mit der Ausbildung des Überzugs vorzugsweise im Spritzgussverfahren hergestellt.

Die Borstenbündel oder Einzelborsten erstrecken sich radial oder zumindest mit einer radialen Richtungskomponente nach außen. In bevorzugter Ausgestaltung der Erfindung ist vorgesehen, dass die Borstenbündel und/oder die Einzelborsten den Überzug vollständig durchdringen und am Träger gehalten sind. Dabei können die Borstenbündel und/oder die Einzelborsten entweder an dem Träger befestigt sein, es ist jedoch auch möglich, dass der Träger aus Kunststoff besteht und die Borstenbündel und/oder die Einzelborsten in den Träger abschnittsweise eingebettet und vorzugsweise auszugssicher gehalten sind. Es lässt sich beispielsweise dadurch erreichen, dass die Borstenbündel und/oder die Einzelborsten zumindest in einem Spritzgusswerkzeug positioniert und dann mit dem Material des Trägers in gewünschten Abschnitten umspritzt werden, wodurch die Borstenbündel und/oder die Einzelborsten fixiert sind. Dabei können die Borstenbündel und/oder die Einzelborsten in formschlüssiger und/oder stoffschlüssiger Weise am Träger gehalten sein. Anschließend kann der Überzug aus dem weich-elastischen Kunststoff aufgespritzt werden, wobei gleichzeitig die einstückig mit dem Überzug verbundenen Finger ausgebildet werden.

Für die Anordnung der Finger und des Borstenbesatzes bzw. der Borstenbündel und/oder der Einzelborsten sind verschiedene geometrische Konfigurationen möglich. In einer möglichen Ausgestaltung der Erfindung kann vorgesehen sein, dass mehrere Borstenbündel und/oder Einzelborsten unter Bildung eines Borstenkranzes vorzugsweise gleichmäßig über den Umfang des Überzugs verteilt angeordnet sind. In Längsrichtung des Überzuges können mehrere in axialem Abstand angeordnete Borstenkränze vorgesehen sein. Die Borstenbündel und/oder Einzelborsten des Borstenkranzes können in Umfangsrichtung in gegenseitigem Abstand angeordnet sein, es ist jedoch auch möglich, die Borstenbündel und/oder Einzelborsten so eng aneinander anzuordnen, dass der Borstenkranz eine senkrecht zur axialen Längsrichtung des Überzugs umlaufende Borstenscheibe bildet.

Desweiteren ist es möglich, dass zumindest einige der Borstenbündel gegenüber benachbarten Borstenbündel in Längsrichtung des Interdentalreinigers versetzt angeordnet sind.

In einer möglichen Ausgestaltung der Erfindung kann vorgesehen sein, dass mehrere Finger unter Bildung eines Fingerkranzes über den Umfang des Überzugs verteilt angeordnet sind. Vorzugsweise sind mehrere Fingerkränze in axialer Richtung des Überzugs in gegenseitigem Abstand angeordnet, wobei in einer möglichen Ausgestaltung der Erfindung kann vorgesehen sein, dass die Borstenkränze und die Fingerkränze in axialer Längsrichtung des Überzugs abwechselnd angeordnet sind.

Darüber hinaus kann vorgesehen sein, dass zumindest einige der Finger gegenüber benachbarten Fingern in Längsrichtung des Interdentalreinigers versetzt angeordnet sind.

Die Finger, die vorzugsweise eine sich radial nach außen verjüngende, konische Gestalt beispielsweise in Form eines Kreiskegels besitzen, kragen mit ihrer Länge vom Überzug aus. In bevorzugter Ausgestaltung der Erfindung ist vorgesehen, dass die Borstenbündel und/oder die Einzelborsten eine größere auskragende Länge besitzen, so dass zumindest einige der Borstenbündel und/oder einige der Einzelborsten in radialer Richtung über die Finger um ein Maß M radial hervorstehen, wobei das Maß M im Bereich von 0,1mm bis 1,5mm, vorzugsweise im Bereich von 0,3mm bis 0,7mm und besonders bevorzugt im Bereich von 0,4mm bis 0,6mm liegt.

In einer weiteren möglichen Ausgestaltung der Erfindung kann vorgesehen sein, dass zumindest einige der Finger über die Borstenbündel und/oder Einzelborsten um ein Maß N radial hervorstehen, wobei das Maß N im Bereich von 0,1mm bis 1,5mm, vorzugsweise im Bereich von 0,3mm bis 0,7mm und besonders bevorzugt im Bereich von 0,4mm bis 0,6mm liegt.

Die Borstenbündel können als einzelstehende Borstenbündel, d.h. in Abstand zu benachbarten Borstenbündel angeordnet sein. Das gleiche gilt für Einzelborsten. In einer möglichen Ausgestaltung der Erfindung ist vorgesehen, dass zumindest einige der Borstenbündel und/oder Einzelborsten in einer oder mehreren, sich in Längsrichtung des Überzugs ersteckenden Borstenreihen angeordnet sind. Die Borstenbündel und/oder Einzelborsten, die eine Borstenreihe bilden, sind vorzugsweise so eng benachbart angeordnet, dass eine kontinuierliche lückenlose Borstenreihe gebildet ist. Die Borstenreihen können gradlinig in Längsrichtung des Überzugs verlaufen, alternativ oder zusätzlich dazu kann jedoch auch vorgesehen sein, dass die Borstenreihen gewendelt in Längsrichtung des Überzugs verlaufen.

Die Borstenbündel und/oder Einzelborsten können unabhängig voneinander von den Fingern auf der Außenseite des Überzugs angeordnet sein. In Weiterbildung der Erfindung kann jedoch alternativ oder zusätzlich dazu vorgesehen sein, dass zumindest einer der Finger von einem Borstenbündel und/oder von zumindest einer Einzelborste durchdrungen ist. Dabei ist vorzugsweise mehr als die Hälfte der Länge der Einzelborste oder der das Borstenbündel bildenden Borsten im Inneren der Finger angeordnet und ragt mit seinem freien Ende aus dem Finger vorzugsweise an dem radial äußeren Ende des Fingers, d.h. der Fingerspitze aus diesem heraus.

Es hat sich als vorteilhaft erwiesen, wenn der Finger von 1 bis 4 Einzelborsten durchdrungen ist.

In einer möglichen Ausgestaltung der Erfindung kann vorgesehen sein, dass die Borstenbündel und/oder die Einzelborsten an ihren radial inneren Ende in den Träger gehalten und insbesondere in diesen eingebettet sind. Alternativ ist es jedoch auch möglich, dass das Borstenbündel und/oder die Einzelborste den Träger radial durchdringt und auf entgegengesetzten Seiten aus diesem hervorsteht. In ihrem mittleren Bereich, der innerhalb des Trägers angeordnet sind, ist das Borstenbündel und/oder die Einzelborste in dem Träger gehalten und insbesondere in diesen eingebettet.

In einer weiteren möglichen Ausgestaltung der Erfindung kann vorgesehen sein, dass die Borstenbündel und/oder die Einzelborsten U-förmig oder V-förmig geformt und mit ihrem Basisabschnitt in den Träger eingebettet sind, so dass sie mit ihren freien Enden in genannter Weise radial hervorstehen.

In einer weiteren möglichen Ausgestaltung der Erfindung kann vorgesehen sein, dass die Borstenbündel und/oder die Einzelborsten L-förmig geformt und mit einem ihrer L-Schenkel in den Träger eingebettet sind und mit dem anderen L-Schenkel aus diesem hervorstehen. Dabei kann der in dem Träger eingebettete L-Schenkel sich in Längsrichtung des Interdentalreinigers, d.h. in Axialrichtung erstrecken, wobei der andere L-Schenkel im wesentlichen senkrecht dazu, d.h. radial oder schräg dazu verläuft.

Die Borsten können in dem Träger formschlüssig oder stoffschlüssig gehalten sein. Eine besonders gute formschlüssige Lagerung der Borstenbündel und/oder Einzelborsten ist gegeben, wenn an einem axialen Ende der Borstenbündel und/oder Einzelborsten eine Verdickung in Form eines verbreiterten Kopfes ausgebildet ist, die in das Material des Trägers eingebettet ist. Ein entsprechender Kopf kann beispielsweise durch Stauchen des Borstenbündels und/oder der Einzelborsten gegebenenfalls bei vorheriger Erwärmung in an sich bekannter Weise ausgebildet werden.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine perspektivische Ansicht eines Interdental-Reinigers gemäß einem 1. Ausführungsbeispiel,
- Fig. 2: Eine vergrößerte Darstellung des vorderen Endes des Interdental-Reinigers gemäß Figur 1,
- Fig. 3: den Schnitt III-III in Figur 2,
- Fig. 4: den Schnitt IV-IV in Figur 2,
- Fig. 5: eine Abwandlung der Ausgestaltung gemäß Figur 4,
- Fig. 6: das vordere Ende eines Interdental-Reinigers gemäß einem 2. Ausführungsbeispiel,
- Fig. 7: eine Abwandlung der Ausführung gemäß Figur 6,
- Fig. 8: das vordere Ende eines Interdental-Reinigers gemäß einem 3. Ausführungsbeispiel,
- Fig. 9: den Schnitt IX-IX in Figur 8,
- Fig. 10: den Schnitt X-X in Figur 7,
- Fig. 11: eine Abwandlung der Ausgestaltung gemäß Figur 8,
- Fig. 12: das vordere Ende eines Interdental-Reinigers gemäß einem 4. Ausführungsbeispiel,
- Fig. 13: den Schnitt XIII-XIII in Figur 12,
- Fig. 14: eine Abwandlung der Ausgestaltung gemäß Figur 13,
- Fig. 15: eine Abwandlung der Ausgestaltung gemäß Figur 2,
- Fig. 16: eine Schnittdarstellung mit verschiedenen Alternativen der Borstenbefestigung,
- Fig. 17: eine Schnittdarstellung mit L-förmigen Borstenbündeln und
- Fig. 18: eine Schnittdarstellung mit U-förmigen Borstenbündeln.

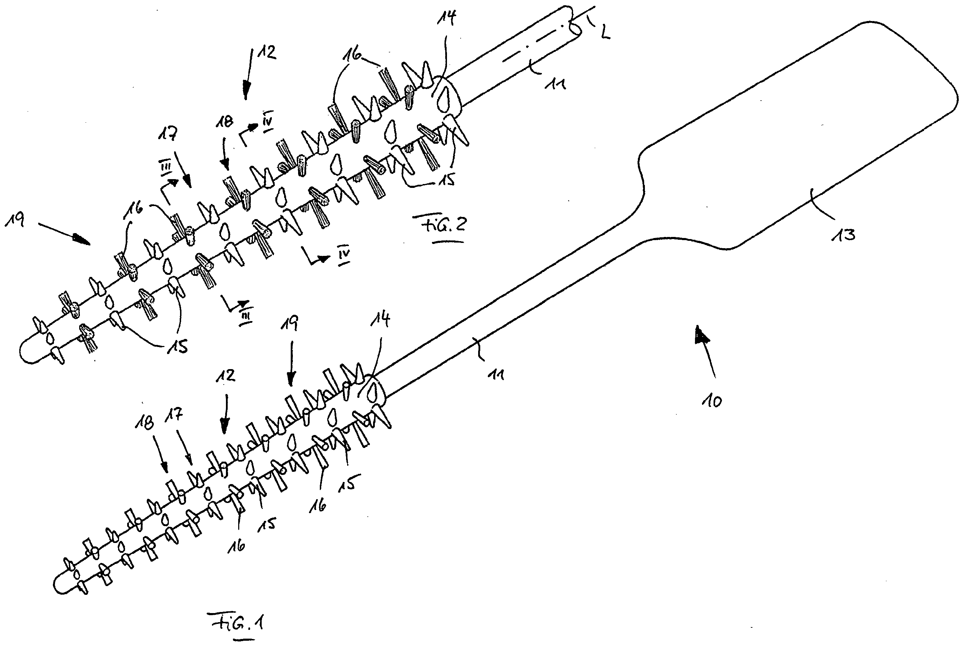

Figur 1 zeigt eine perspektivische Darstellung eines Interdental-Reinigers 10, der einen aus Kunststoff bestehenden, stabförmigen Träger 11 besitzt, an dem an dessen hinteren, gemäß Figur 1 rechten Ende ein Griffabschnitt 13 ausgebildet ist, an dem ein Benutzer den Interdental-Reiniger 10 ergreifen kann.

An dem dem Griffabschnitt 13 axial entgegengesetzten vorderen, gemäß Figur 1 linken Ende ist auf den stabförmigen Träger 11 eine Reinigungseinrichtung 12 aufgebracht. Diese weist einen Überzug 14 des Trägers 11 auf, wobei der Überzug 14 vorzugsweise aus einem weich-elastischen Kunststoff besteht und auf seiner Außenseite eine Strukturierung 19 besitzt.

Die Figuren 2 bis 4 zeigen Einzelheiten des Aufbaus und der Elemente der Reinigungseinrichtung 12 und der Strukturierung 19.

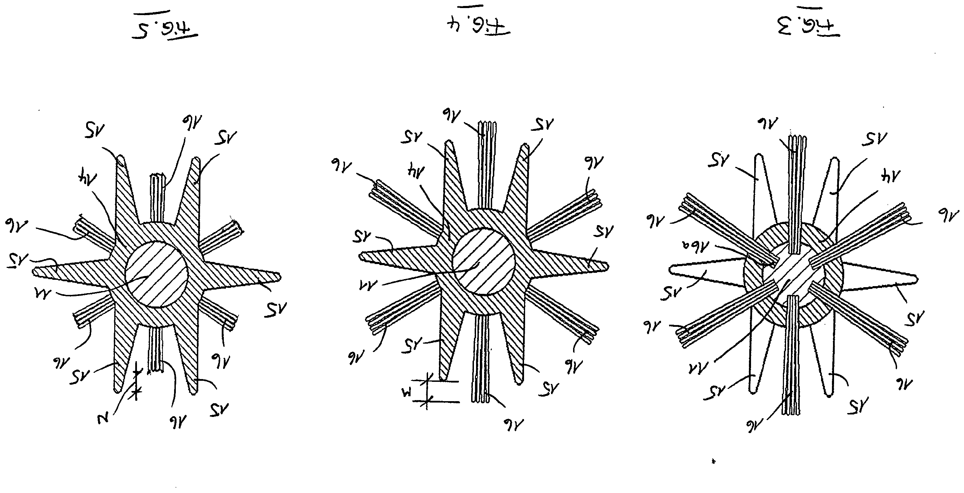

Der Überzug 14 besitzt auf seiner Außenseite radial nach außen hervorstehende, frei auskragende Finger 15, die aus dem gleichen Material wie der Überzug 14 bestehen und einstückig mit diesem ausgebildet ist, wie es in Figur 4 gezeigt ist. Die Finger 15 besitzen eine sich radial nach außen verjüngende Kegelform (hier beispielhaft als Kreiskegel dargestellt). Bei dem dargestellten Ausführungsbeispiel sind jeweils 6 Finger in einer senkrecht zur Längsachse L des Trägers 11 verlaufenden Ebene über den Umfang des Überzugs 14 verteilt angeordnet und bilden einen Fingerkranz 17. Wie Figur 2 zeigt, sind in axialer Längsrichtung des Überzugs 14 mehrere in axialem Abstand angeordnete Fingerkränze 17 vorgesehen. Zwischen benachbarten Fingerkränzen 17 ist jeweils ein Borstenkranz 18 angeordnet. Jeder Borstenkranz 18 umfasst sechs Borstenbündel 16, die mit ihrem radial inneren Ende in den Träger 11 eingebettet sind (siehe Figur 3), den Überzug 14 durchdringen und radial nach außen aus diesem hervorstehen. Wie Figur 4 zeigt, ist die frei auskragende Länge zumindest einiger Borstenbündel größer als die frei auskragende Länge der Finger 15, so dass die freien Enden der Borstenbündel 16 um ein Maß M, das im Bereich von 0,1mm bis 1,5mm liegt, radial nach außen über die Finger 15 hervorstehen.

Figur 5 zeigt eine der Figur 4 ähnliche Darstellung, wobei jedoch hier die Finger 15 die Borstenbündel 16 um ein Maß N radial überragen. Das Maß N liegt im Bereich von 0,1mm bis 1,5mm, so dass die Finger 15 radial nach außen über die Borstenbündel 16 hervorstehen.

Wie die Figuren 3 und 4 zeigen, sind die Finger 15 und die Borstenbündel 16 in Umfangsrichtung so ausgerichtet, dass in Projektion jeweils ein Borstenbündel 16 zwischen zwei Fingern 15 bzw. ein Finger 15 zwischen zwei benachbarten Borstenbündeln 16 angeordnet ist.

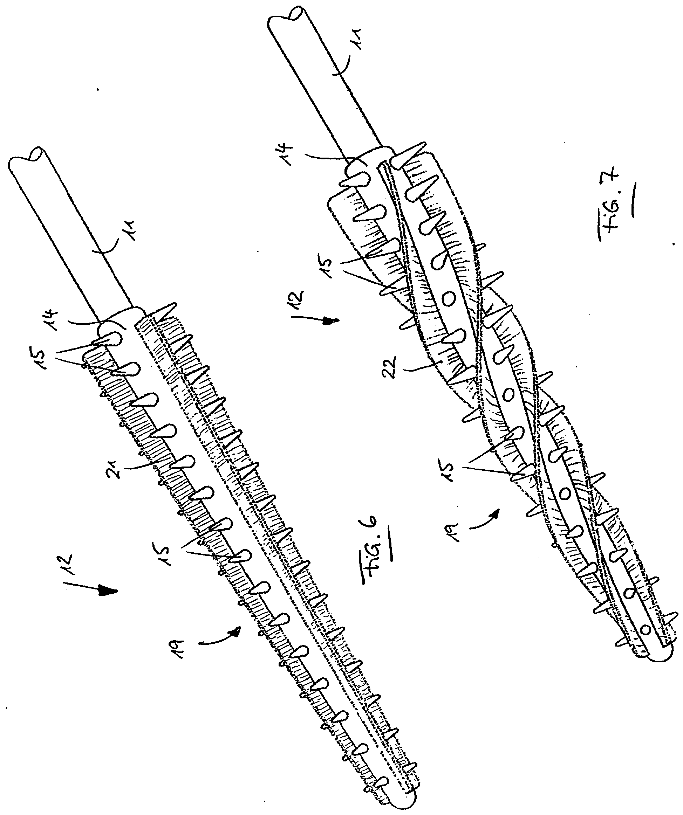

Figur 6 zeigt ein 2. Ausführungsbeispiel, das sich von dem 1. Ausführungsbeispiel gemäß den Figuren 1 bis 4 in der Anordnung und Ausrichtung des Borstenbesatzes unterscheidet. Gemäß Figur 6 ist der Borstensatz von mehreren sich in Längsrichtung des Überzugs 14 bzw. des stabförmigen Trägers 11 erstreckenden Borstenreihen 21 gebildet, die gradlinig in Längsrichtung des Überzugs 14 verlaufen und eine dichte, lückenlose "Borstenwand" bilden. Gemäß dem dargestellten Ausführungsbeispiel sind vier gradlinige Borstenreihen über den Umfang des Überzugs 14 gleichmäßig verteilt, wobei zwischen zwei in Umfangsrichtung benachbarten Borstenreihen jeweils eine Reihe von Fingern 15 angeordnet ist.

Figur 7 zeigt eine Weiterbildung oder Abwandlung der Ausgestaltung gemäß Figur 6 und unterscheidet sich von dieser dadurch, dass die Borstenreihen 22 gewendelt in Längsrichtung des Überzugs 14 verlaufen und diesen somit umschlingen. Auch hierbei sind zwischen zwei in Umfangsrichtung beabstandeten Borstenreihen 22 jeweils eine Reihe von Fingern 15 vorgesehen.

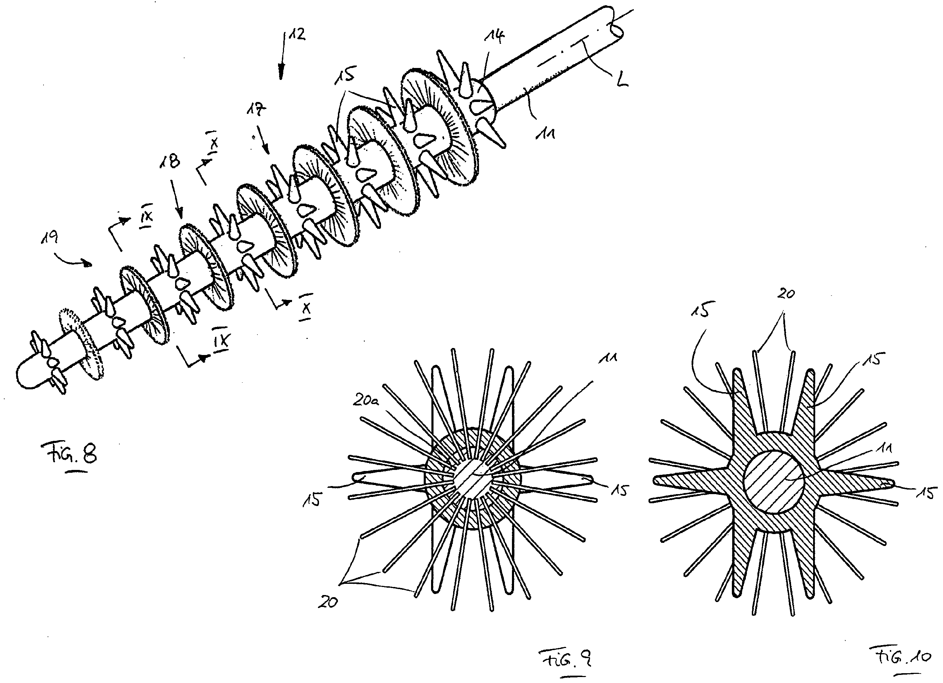

Die Figuren 8 bis 10 zeigen ein 3. Ausführungsbeispiel, das eine Weiterbildung des Ausführungsbeispiels gemäß den Figuren 1 bis 4 darstellt und sich von diesen dadurch unterscheidet, dass die Borstenkränze 18 nunmehr von einer Vielzahl von Einzelborsten 20 gebildet sind, die in enger Packung so angeordnet sind, dass die Borstenkränze 18 nach Art einer kontinuierlichen Borstenscheibe ausgestaltet sind, die sich senkrecht zur Längsachse L des Überzugs 14 bzw. des Trägers 11 erstrecken.

Wie Figur 9 zeigt, sind die Einzelborsten 20 an ihrem radial inneren Ende in das Material des Trägers 11 eingebettet und durchdringen den Überzug 14 und kragen aus diesem radial frei aus.

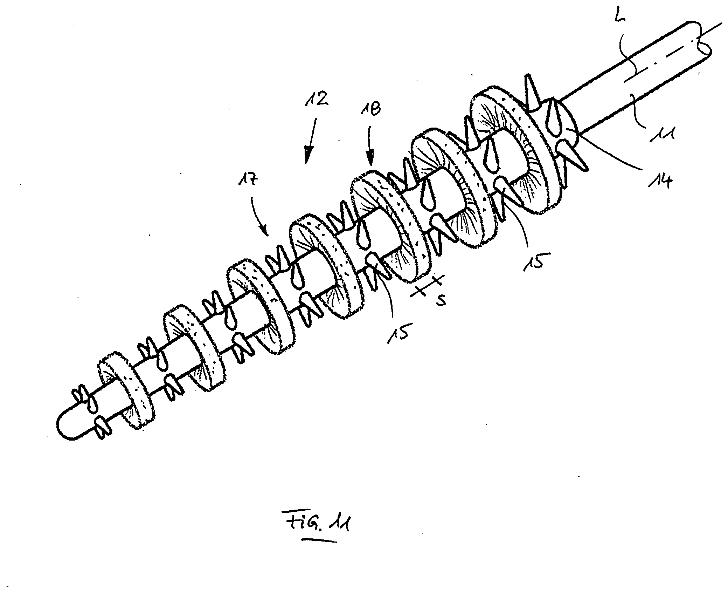

Figur 11 zeigt eine Weiterbildung der Ausgestaltung gemäß Figur 8 und unterscheidet sich von dieser dadurch, dass die Borstenkränze 18 bzw. Borstenscheiben eine wesentlich größere Abmessung in axialer Richtung des Überzugs 14 bzw. des Trägers 11 besitzen, d.h. wesentlich dicker sind und eine Stärke s im Bereich von 0,5mm bis 1,0mm besitzen.

Bei den bisher dargestellten Ausführungsbeispielen waren die Finger 15 einerseits und der Borstenbesatz, d.h. die Borstenbündel 16 bzw. die Einzelborsten 20 andererseits jeweils unabhängig voneinander ausgebildet und gelagert bzw. gehalten.

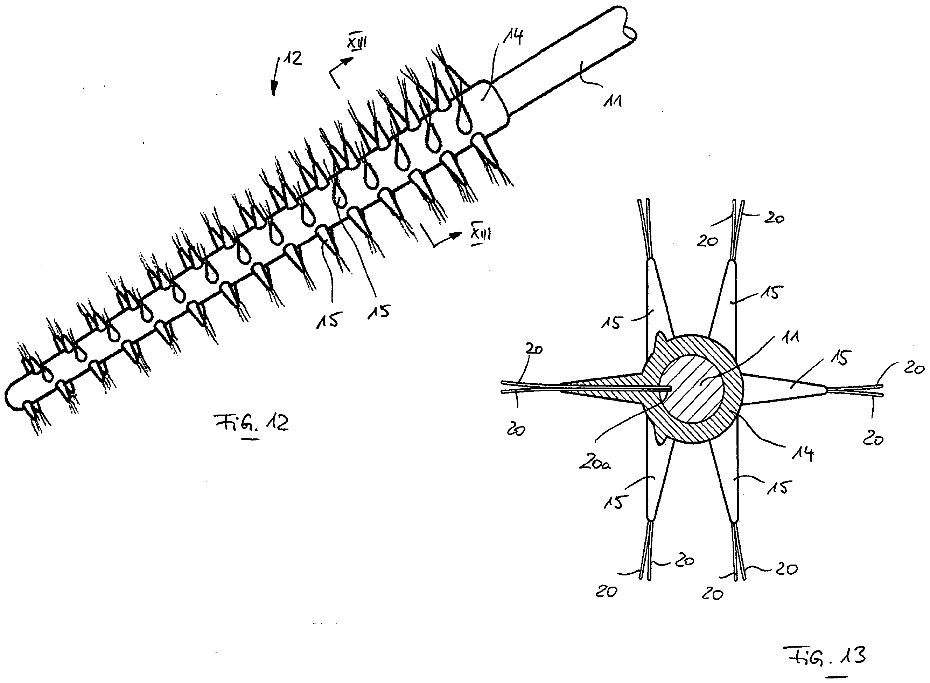

Die Figuren 12 und 13 zeigen ein weiters Ausführungsbeispiel des erfindungsgemäßen Interdental-Reinigers, bei dem Einzelborsten 20 vorgesehen sind, die die Finger 15 durchdringen.

Der Interdentalreiniger 10 besitzt den genannten Aufbau mit dem stabförmigen Träger 11 und dem Überzug 14, der auf seiner Außenseite mehrere radial nach außen hervorstehende, einstückig angeformte Finger 15 trägt. Wie Figur 13 zeigt, ist jeder Finger 15 von zwei Einzelborsten 20 durchdrungen. Die Einzelborsten 20 sind an ihrem radial inneren Ende in das Material des Trägers 11 eingebettet und verlaufen von dort radial nach außen durch den Finger 15 und treten an dessen radial äußeren Ende, d.h. an der Spitze des Fingers 15 aus und stehen aus diesem radial hervor. Auf diese Weise beeinflussen sich die Einzelborsten 20 und der zugehörige Finger 15 jeweils wechselseitig, indem die Einzelborsten 20 dem Finger 15 eine höhere Biegestabilität verleihen und der Finger 15 die Einzelborsten 20 über einen wesentlichen Abschnitt ihrer axialen Länge stützt, so dass die Knickgefahr der Borsten 20 verringert ist.

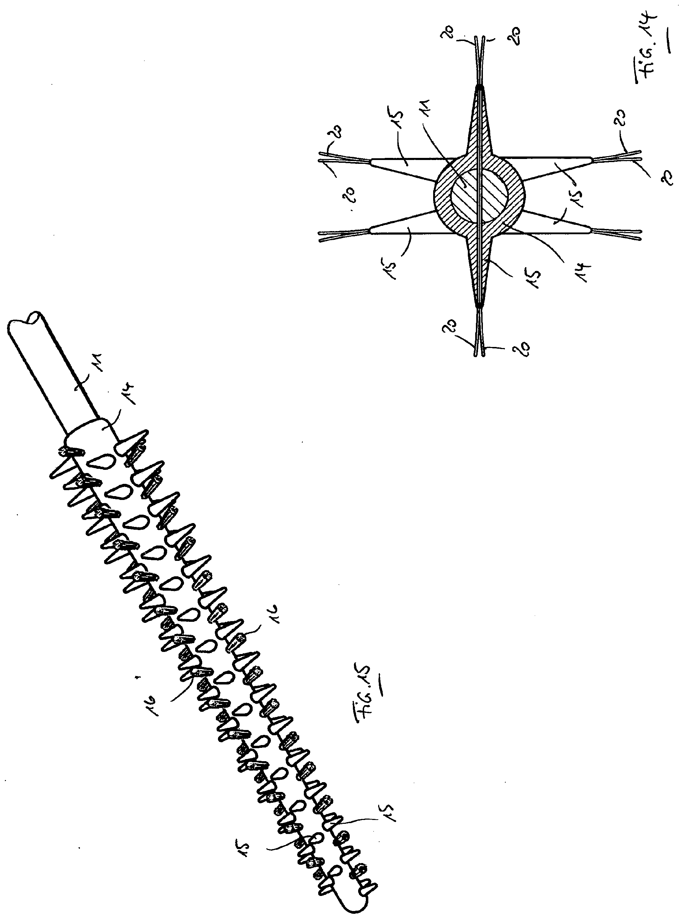

Figur 14 zeigt eine Abwandlung der Ausgestaltung gemäß Figur 13. Auch hierbei erstrecken sich zwei Einzelborsten 20 in radialer Richtung durch die Finger 15 und treten an der äußeren Spitze des Fingers 15 aus diesem aus. Jedoch sind die Einzelborsten 20 nicht mit ihrem inneren Ende in dem Material des Trägers 11 gehalten, sondern durchlaufen den Träger 11 und einen auf der gegenüberliegenden Seite angeordneten Finger 15 und treten an dessen radial äußeren Ende aus diesem aus. Somit sind die Einzelborsten 20 in einem mittleren Bereich innerhalb des Trägers angeordnet und in diesem gehalten.

Bei den vorgenannten Ausführungsbeispielen waren die Borstenbündel 16 und/oder die Einzelborsten 20 und/oder die Finger 15 in umlaufenden Fingerkränzen angeordnet. Figur 15 zeigt nun ein Ausführungsbeispiel, bei dem die Finger jeweils gegenüber den benachbarten Fingern in Axialrichtung bzw. Längrichtung des Interdentalreinigers versetzt angeordnet sind. Das Gleiche gilt für die Borstenbündel 16 und/oder die Einzelborsten. Auf diese Weise ist erreicht, dass beim axial Einschieben des Interdentalreinigers in einen Zahnzwischenraum die Finger 15 nacheinander mit der Zahnoberfläche in Kontakt kommen, wodurch der Widerstand verringert ist. Gleiches gilt für die Borstenbündel 20.

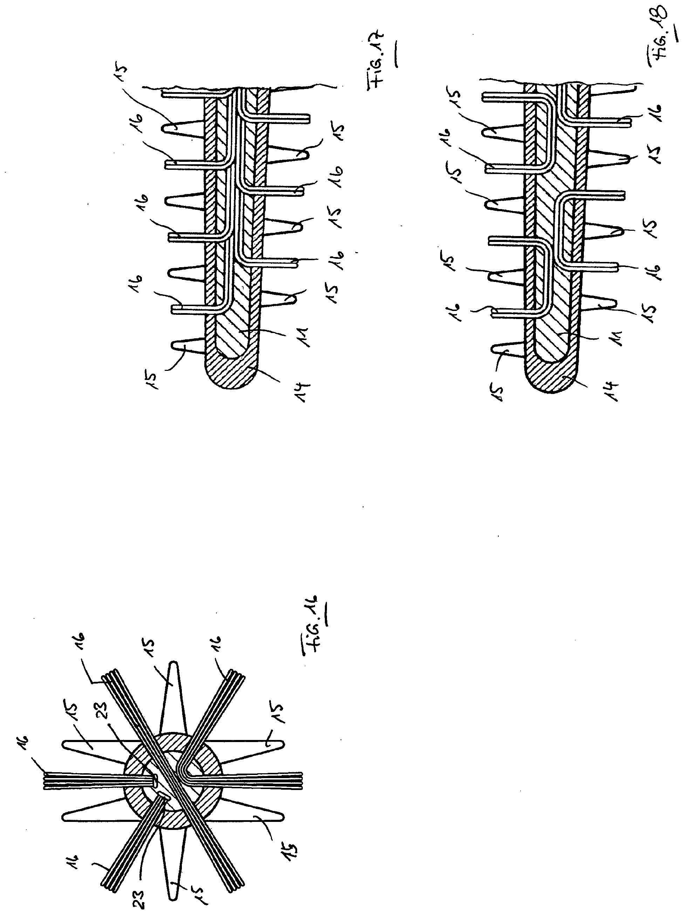

Figur 16 zeigt alternative Möglichkeiten zur Befestigung eines Borstenbündels 16 in dem Material des Trägers 11. In einer 1., in Figur 16 oben dargestellten Ausführung ist am radial inneren Ende des Borstenbündels 16 ein verbreiteter Kopf 23 ausgebildet, mit dem das Borstenbündel 20 in das Material des Trägers 11 eingebettet ist, so dass eine hohe Auszugsfestigkeit in formschlüssiger Weise erreicht ist.

Gemäß einer 2., in Figur 1 in der Mitte dargestellten Ausführung ist das Borstenbündel 20 so lang, dass es das Material des Trägers 11 vollständig durchdringt und auf entgegengesetzten Seiten aus diesem hervorsteht.

Gemäß einer 3., in Figur 16 unten dargestellten Ausführung ist das Borstenbündel V-förmig gebogen und mit dem gebogenen Basis-Abschnitt der V-Form in das Material des Trägers 11 eingebettet, wobei die Schenkel der V-Form radial auskragen. Auch hier ist eine sehr hohe Auszugssicherheit gegeben.

Figur 17 zeigt eine weitere Ausführung der Befestigung des Borstenbündels 16. Das Borstenbündel 16 ist L-förmig gebogen, wobei ein Schenkel der L-Form in Längsrichtung des Interdentalreinigers innerhalb des Materials des Trägers 11 verläuft, während der andere Schenkel der L-Form senkrecht dazu, d.h. radial zur Längsrichtung des Interdentalreinigers verläuft und radial hervorsteht.

Gemäß Figur 18 ist das Borstenbündel 16 U-förmig gebogen und besitzt einen vorzugsweise horizontalen Basisabschnitt und zwei davon auskragende Schenkel. Mit dem Basisabschnitt ist das Borstenbündel 16 in das Material des Trägers 11 eingebettet und in diesem gehalten, während die beiden Schenkel radial hervorstehen.

## Patentansprüche

1. Interdental-Reiniger mit einem stabförmigen Träger (11), der in einem axialen Endbereich eine Reinigungseinrichtung (12) aufweist, wobei die Reinigungseinrichtung (12) einen aus einem weich-elastischen Kunststoff bestehenden Überzug (14) des Trägers (11) umfasst und wobei auf der Außenseite des Überzugs (14) eine Strukturierung (19) ausgebildet ist, die mehrere mit radialer Komponente vom Überzug (14) hervorstehende Finger (15) aufweist, die aus dem gleichen Material wie der Überzug (14) bestehen und einstückig mit diesem verbunden sind, **dadurch gekennzeichnet, dass** die Strukturierung (19) zusätzlich einen Borstenbesatz mit mehreren mit radialer Komponente vom Überzug (14) hervorstehenden Borstenbündeln (16) und/oder Einzelborsten (20) aufweist, die jeweils von dünnen, vorgefertigten Abschnitten eines aus Kunststoff bestehenden Monofilamentes oder Multifilamentes mit einem maximalen Durchmesser von 0,25mm gebildet sind, wobei der Träger (11) aus Kunststoff besteht und die Borstenbündel (16) und/oder die Einzelborsten (20) den Überzug (14) durchdringen und am Träger (11) gehalten und in den Träger (11) eingebettet sind.

2. Interdental-Reiniger nach Anspruch 1, **dadurch gekennzeichnet, dass** mehrere Borstenbündel (16) und/oder Einzelborsten (20) unter Bildung zumindest ei-nes Borstenkranzes (18) über den Umfang des Überzugs (14) verteilt angeordnet sind.

3. Interdental-Reiniger nach Anspruch 1 oder 2, **dadurch gekennzeichnet, dass** mehrere Finger (15) unter Bildung zumindest eines Fingerkranzes (17) über den Um-fang des Überzugs (14) verteilt angeordnet sind.

4. Interdental-Reiniger nach Anspruch 2 und 3, **dadurch gekennzeichnet, dass** die Borstenkränze (18) und die Fingerkränze (17) in Längsrichtung des Überzugs (14) abwechselnd angeordnet sind.

5. Interdental-Reiniger nach einem der Ansprüche 1 bis 4, **dadurch gekennzeichnet, dass** zumindest einige der Borstenbündel (16) und/oder Einzelborsten (20) über die Finger (15) um ein Maß M radial hervorstehen.

6. Interdental-Reiniger nach Anspruch 5, **dadurch gekennzeichnet, dass** das Maß M im Bereich von 0,1mm bis 1,5mm liegt.

7. Interdental-Reiniger nach Anspruch 5, **dadurch gekennzeichnet, dass** das Maß M im Bereich von 0,3mm bis 0,7mm liegt.

8. Interdental-Reiniger nach einem der Ansprüche 1 bis 7, **dadurch gekennzeichnet, dass** zumindest einige der Finger (15) über die Borstenbündel (16) und/oder Einzelborsten (20) um ein Maß N radial hervorstehen.

9. Interdental-Reiniger nach Anspruch 8, **dadurch gekennzeichnet, dass** das Maß N im Bereich von 0,1mm bis 1,5mm liegt.

10. Interdental-Reiniger nach Anspruch 9, **dadurch gekennzeichnet, dass** das Maß N im Bereich von 0,3mm bis 0,7mm liegt.

11. Interdental-Reiniger nach einem der Ansprüche 1 bis 10, **dadurch gekennzeichnet, dass** die Borstenbündel (16) und/oder Einzelborsten (20) in zumindest einer sich in Längsrichtung eines Überzugs (14) erstreckenden Borstenreihe (21, 22) angeordnet sind.

12. Interdental-Reiniger nach Anspruch 11, **dadurch gekennzeichnet, dass** die Borstenreihe (21) gradlinig in Längrichtung des Überzugs (14) verläuft.

13. Interdental-Reiniger nach Anspruch 11, **dadurch gekennzeichnet, dass** die Borstenreihe (22) gewendelt in Längsrichtung des Überzugs (14) verläuft.

14. Interdental-Reiniger nach einem der Ansprüche 1 bis 13, **dadurch gekennzeichnet, dass** zumindest einer der Finger (15) von einem Borstenbündel (16) und/oder von zumindest einer Einzelborste (20) durchdrungen ist.

15. Interdental-Reiniger nach Anspruch 14, **dadurch gekennzeichnet, dass** das Borstenbündel (16) und/oder die zumindest eine Einzelborste (20) am radial äußeren Ende des Fingers (15) aus diesem austritt.

16. Interdental-Reiniger nach Anspruch 14 oder 15, **dadurch gekennzeichnet, dass** der Finger (15) von 1 bis 4 Einzelborsten (20) durchdrungen ist.

17. Interdental-Reiniger nach einem der Ansprüche 1 bis 16, **dadurch gekennzeichnet, dass** die Borstenbündel (16) und/oder die Einzelborsten (20) an ihrem radial inneren Ende in dem Träger (11) gehalten sind.

18. Interdental-Reiniger nach einem der Ansprüche 1 bis 16, **dadurch gekennzeichnet, dass** das Borstenbündel (16) und/oder die Einzelborste (20) den Träger (11) radial durchdringen und auf entgegengesetzten Seiten aus diesem hervorstehen.

19. Interdental-Reiniger nach einem der Ansprüche 1 bis 17, **dadurch gekennzeichnet, dass** die Borstenbündel (16) und/oder die Einzelborsten (20) U-förmig oder V-förmig geformt und mit ihrem Basisabschnitt in den Träger (11) eingebettet sind.

20. Interdental-Reiniger nach einem der Ansprüche 1 bis 17, **dadurch gekennzeichnet**, das die Borstenbündel (16) und/oder Einzelborsten (20) L-förmig geformt und mit einem L-Schenkel in den Träger (11) eingebettet sind und mit dem anderen L-Schenkel aus diesem hervorstehen.

21. Interdental-Reiniger nach einem der Ansprüche 1 bis 19, **dadurch gekennzeichnet**, das die Borstenbündel (16) und/oder Einzelborsten (20) an ihrem einen Ende mit einem verbreiterten Kopf (23) versehen und mit diesem in den Träger (11) eingebettet sind.

## Claims

1. Interdental cleaner with a rod-like support (11), which has a cleaning device (12) in an axial end area, wherein the cleaning device (12) comprises a cover (14) of the support (11), which said cover consists of a flexible plastic, and wherein a structuring (19) is formed on the outer side of the support (11), which said structuring has a plurality of fingers (15) projecting with a radial component from the support (14) and which consist of the same material as the cover (14) and are connected with this in one piece, **characterized in that** the structuring (19) additionally has a bristle border with a plurality of bristle bundles (16) and/or individual bristles (20), which project with a radial component from the cover (14) and are formed each by thin prefabricated sections of a monofilament or multifilament consisting of a plastic, which have a maximum diameter of 0,25mm, wherein the support (11) consists of a plastic and the bristle bundles (16) and/or individual bristles (20) pass through the cover (14) and are held on the support (11) and are embedded in the support (11).

2. Interdental cleaner in accordance claim 1, **characterized in that** a plurality of bristle bundles (16) and/or individual bristles (20) are arranged distributed over the circumference of the cover (14), forming at least one bristle crown (18).

3. Interdental cleaner in accordance with claim 1 or 2, **characterized in that** a plurality of fingers (15) are arranged distributed over the circumference of the cover (14), forming at least one finger crown (17).

4. Interdental cleaner in accordance with claims 2 and 3, **characterized in that** the bristle crowns (18) and finger crowns (17) are arranged alternatingly in the longitudinal direction of the cover (14).

5. Interdental cleaner in accordance with one of the claims 1 through 4, **characterized in that** at least some of the bristle bundles (16) and/or individual bristles (20) project radially over the fingers (15) by a measure M.

6. Interdental cleaner in accordance with claim 5, **characterized in that** the measure M is in the range of 0.1 mm to 1.5 mm.

7. Interdental cleaner in accordance with claim 5, **characterized in that** the measure M is in the range of 0.3 mm to 0.7 mm.

8. Interdental cleaner in accordance with one of the claims 1 through 7, **characterized in that** at least some of the fingers (15) project radially over the bristle bundles (16) and/or individual bristles (20) by a measure N.

9. Interdental cleaner in accordance with claim 8, **characterized in that** the measure N is in the range of 0.1 mm to 1.5 mm.

10. Interdental cleaner in accordance with claim 9, **characterized in that** the measure N is in the range of 0.3 mm to 0.7 mm.

11. Interdental cleaner in accordance with one of the claims 1 through 10, **characterized in that** the bristle bundles (16) and/or individual bristles (20) are arranged in at least one row of bristles (21, 22) extending in the longitudinal direction of a cover (14).

12. Interdental cleaner in accordance with claim 11, **characterized in that** the row of bristles (21) extends in a straight line in the longitudinal direction of the cover (14).

13. Interdental cleaner in accordance with claim 11, **characterized in that** the row of bristles (22) extends helically in the longitudinal direction of the cover (14).

14. Interdental cleaner in accordance with one of the claims 1 through 13, **characterized in that** a bristle bundle (16) and/or at least one individual bristle (20) passes through at least one of the fingers (15).

15. Interdental cleaner in accordance with claim 14, **characterized in that** the bristle bundle (16) and/or the at least one individual bristle (20) exits from the finger (15) at the radially outer end thereof.

16. Interdental cleaner in accordance with claim 14 or 15, **characterized in that** 1 to 4 individual bristles (20) pass through the finger (15).

17. Interdental cleaner in accordance with one of the claims 1 through 16, **characterized in that** the bristle bundles (16) and/or individual bristles (20) are held in the support (11) at their radially inner end.

18. Interdental cleaner in accordance with one of the claims 1 through 16, **characterized in that** the bristle bundle (16) and/or individual bristle (20) passes radially through the support (11) and projects from this on opposite sides.

19. Interdental cleaner in accordance with one of the claims 1 through 17, **characterized in that** the bristle bundle (16) and/or individual bristles (20) are shaped in the form of a U or a V and are embedded with their base section in the support (11).

20. Interdental cleaner in accordance with one of the claims 1 through 17, **characterized in that** the bristle bundles (16) and/or individual bristles (20) are L-shaped and are embedded with one leg of the L in the support (11) and project from this with the other leg of the L.

21. Interdental cleaner in accordance with one of the claims 1 through 19, **characterized in that** the bristle bundles (16) and/or individual bristles (20) are provided at one of their ends with a broadened head (23) and are embedded with this in the support (11).

## Revendications

1. Dispositif de nettoyage interdentaire avec un support (11) en forme de tige comportant, dans une région d'extrémité axiale, un dispositif de nettoyage (12), le dispositif de nettoyage (12) comprenant un revêtement (14), composé d'une matière plastique élastique souple, du support (11) et une structuration (19) étant réalisée sur le côté extérieur du revêtement (14), ladite structuration comportant plusieurs doigts (15) saillant dans la composante radiale hors du revêtement (14), lesdits doigts étant composés du même matériau que le revêtement (14) et étant reliés d'un seul tenant à lui, **caractérisé en ce que** la structuration (19) comporte en outre un garnissage de soies avec plusieurs paquets de soies (16) et/ou soies individuelles (20) saillant dans la composante radiale hors du revêtement (14), ceux-ci étant respectivement formés par des sections minces préfabriquées d'un monofilament ou multifilament composé de matière plastique avec un diamètre maximal de 0,25 mm, le support (11) étant en matière plastique et les paquets de soies (16) et/ou les soies individuelles (20) traversant le revêtement (14) et étant maintenus au niveau du support (11) et encastrés dans le support (11).

2. Dispositif de nettoyage interdentaire selon la revendication 1, **caractérisé en ce que** plusieurs paquets de soies (16) et/ou soies individuelles (20) sont disposés de façon répartie sur toute la périphérie du revêtement (14) en formant au moins une couronne de soies (18).

3. Dispositif de nettoyage interdentaire selon la revendication 1 ou 2, **caractérisé en ce que** plusieurs doigts (15) sont disposés de façon répartie sur toute la périphérie du revêtement (14) en formant au moins une couronne de doigts (17).

4. Dispositif de nettoyage interdentaire selon la revendication 2 et 3, **caractérisé en ce que** les couronnes de soies (18) et les couronnes de doigts (17) sont disposées en alternance dans la direction longitudinale du revêtement (14).

5. Dispositif de nettoyage interdentaire selon l'une quelconque des revendications 1 à 4, **caractérisé en ce qu'**au moins quelques-uns des paquets de soies (16) et/ou quelques-unes des soies individuelles (20) ressortent d'une dimension M dans le plan radial au-dessus des doigts (15).

6. Dispositif de nettoyage interdentaire selon la revendication 5, **caractérisé en ce que** la dimension M se situe dans la plage de 0,1 mm à 1,5 mm.

7. Dispositif de nettoyage interdentaire selon la revendication 5, **caractérisé en ce que** la dimension M se situe dans la plage de 0,3 mm à 0,7 mm.

8. Dispositif de nettoyage interdentaire selon l'une quelconque des revendications 1 à 7, **caractérisé en ce qu'**au moins quelques-uns des doigts (15) ressortent d'une dimension N dans le plan radial au-dessus des paquets de soies (16) et/ou des soies individuelles (20).

9. Dispositif de nettoyage interdentaire selon la revendication 8, **caractérisé en ce que** la dimension N se situe dans la plage de 0,1 mm à 1,5 mm.

10. Dispositif de nettoyage interdentaire selon la revendication 9, **caractérisé en ce que** la dimension N se situe dans la plage de 0,3 mm à 0,7 mm.

11. Dispositif de nettoyage interdentaire selon l'une quelconque des revendications 1 à 10, **caractérisé en ce que** les paquets de soies (16) et/ou les soies individuelles (20) sont disposés in au moins une rangée de soies (21, 22) s'étendant dans la direction longitudinale d'un revêtement (14).

12. Dispositif de nettoyage interdentaire selon la revendication 11, **caractérisé en ce que** la rangée de soies (21) s'étend de façon rectiligne dans la direction longitudinale du revêtement (14).

13. Dispositif de nettoyage interdentaire selon la revendication 11, **caractérisé en ce que** la rangée de soies (22) s'étend de façon spiralée dans la direction longitudinale du revêtement (14).

14. Dispositif de nettoyage interdentaire selon l'une quelconque des revendications 1 à 13, **caractérisé en ce qu'**au moins un des doigts (15) est traversé par un paquet de soies (16) et/ou par au moins une soie individuelle (20).

15. Dispositif de nettoyage interdentaire selon la revendication 14, **caractérisé en ce que** le paquet de soies (16) et/ou l'au moins une soie individuelle (20) sort du doigt (15) au niveau de l'extrémité extérieure dans le plan radial de celui-ci.

16. Dispositif de nettoyage interdentaire selon la revendication 14 ou 15, **caractérisé en ce que** le doigt (15) est traversé par 1 à 4 soies individuelles (20).

17. Dispositif de nettoyage interdentaire selon l'une quelconque des revendications 1 à 16, **caractérisé en ce que** les paquets de soies (16) et/ou les soies individuelles (20) sont maintenus dans le support (11) au niveau de son extrémité intérieure dans le plan radial.

18. Dispositif de nettoyage interdentaire selon l'une quelconque des revendications 1 à 16, **caractérisé en ce que** le paquet de soies (16) et/ou la soie individuelle (20) traversent le support (11) dans le plan radial et ressortent de celui-ci sur les côtés opposés.

19. Dispositif de nettoyage interdentaire selon l'une quelconque des revendications 1 à 17, **caractérisé en ce que** les paquets de soies (16) et/ou les soies individuelles (20) prennent une forme de U ou de V et sont encastrées dans le support (11) avec leur section de base.

20. Dispositif de nettoyage interdentaire selon l'une quelconque des revendications 1 à 17, **caractérisé en ce que** les paquets de soies (16) et/ou les soies individuelles (20) prennent une forme de L et sont encastrés dans le support (11) avec une branche du L et ressortent du support avec l'autre branche du L.

21. Dispositif de nettoyage interdentaire selon l'une quelconque des revendications 1 à 19, **caractérisé en ce que** les paquets de soies (16) et/ou les soies individuelles (20) sont pourvus, au niveau de leur première extrémité, d'une tête (23) élargie et sont encastrés avec elle dans le support (11).
